# EUROPÄISCHE PATENTANMELDUNG

(11) **EP 2 923 830 A1**
(43) Veröffentlichungstag der Anmeldung: **30.09.2015**
(21) Anmeldenummer: 14162132.6
(22) Anmeldetag: 27.03.2014
(51) Int. Cl.: B32B 7/06, B32B 7/12, B32B 27/32

(54) **Laminat mit hoher Stabilität gegen Einreißen und/oder Weiterreißen**

(71) Anmelder: Horn & Bauer GmbH & Co. KG, 34613 Schwalmstadt (DE)
(72) Erfinder: Daum, Helwig, 34628 Willingshausen (DE)
(74) Vertreter: REHBERG HÜPPE + PARTNER

(57) **Zusammenfassung**

Die Erfindung betrifft ein Laminat (1) mit hoher Stabilität gegen Einreißen und/oder Weiterreißen.

Das erfindungsgemäße Laminat (1) besitzt eine Decklage (2) und eine mehrschichtige Basislage (4), die über ein Adhäsionsmittel (3) miteinander laminiert sind. Zwischen benachbarten Schichten (4a; 4c) ist eine Rissenergie-Aufnahmeschicht (5) vorhanden, im Bereich welcher bei einem Einreißen und/oder Weiterreißen unter Aufnahme von Rissenergie eine teilweise Durchtrennung der Rissenergie-Aufnahmeschicht (5) erfolgt. Erfindungsgemäß ist zwischen dem Adhäsionsmittel (3) und der Decklage (2) einerseits und der Rissenergie-Aufnahmeschicht (5) andererseits eine Pufferschicht (7) der Basislage (4) angeordnet.

## Beschreibung

### TECHNISCHES GEBIET DER ERFINDUNG

Die Erfindung betrifft ein Laminat mit hoher Stabilität gegen Einreißen und/oder Weiterreißen.

### STAND DER TECHNIK

Gemäß WO 2011/127916 werden gattungsgemäße Laminate für die verschiedensten Anwendungen eingesetzt. Insbesondere finden die Laminate Einsatz in der Lebensmittelindustrie, der pharmazeutischen Industrie oder der Kosmetikindustrie, beispielsweise für Verpackungen feuchter Tücher, feuchter Lebensmittel, aromahaltiger Stoffe oder auch steriler Materialien, welche insbesondere in Siegelbeuteln oder Siegelschachteln verpackt werden, die dann im Bedarfsfall vom Nutzer vor Gebrauch zu öffnen sind. Die Öffnung kann erfolgen durch ein Durchtrennen von Sollbruchstellen oder durch Ablösen des an einem Grundkörper anhaftenden Laminats. Im Zusammenhang mit diesem Öffnen der Verpackung tritt dann häufig eine unerwünschte Rissbildung in dem Laminat auf, welche die ästhetische Wirkung der Verpackung beeinträchtigt. Handelt es sich um eine wiederverschließbare Verpackung, so beeinträchtigt eine etwaige Rissbildung die Verschlusswirkung der Verpackung, was beispielsweise zu einer Kontamination des Inhalts der Verpackung mit Verunreinigungen, zu einem Austrocknen eines in feuchtem Zustand zu haltenden Inhalts der Verpackung oder einem Aromaverlust des Inhalts der Verpackung führen kann. Typische Anwendungsgebiete sind beispielsweise Trockenfrüchte in wiederverschließbaren Boxen oder Beuteln, feuchtes Tierfutter, Tücher mit kosmetischen Reinigungsmitteln, wie Make-up-Entferner, Watte, Tupfer etc. Möglich ist aber auch, dass Waschmittel, Geschirrreiniger für Spülmaschinen, Düngemittel usw. in derartigen Verpackungen geliefert werden, die durch Aufreißen oder Ablösen des Laminats geöffnet werden.

WO 2011/127916 A1 beschreibt ein Laminat mit verminderter Risspropagation. Dieses Laminat besitzt eine Toplage, eine Adhäsionslage und eine Basislage. Die Toplage kann bestehen aus

Metall, Papier, Textil, Polyolefinen wie Polyethylen, Polybutylen, Polypropylen oder anderen Polymeren wie Polyamid, Polyester, Polystyrol, Polyurethan, Cellophan, Kasein, Lignin oder Stärkefilme. Die Basislage soll eine hohe Reißfestigkeit des Laminats gewährleisten. Hierzu kann die Basislage mit elastischen Polyolefinen wie Polyethylen oder Polybutylen oder anderen Polymeren gebildet sein. Die Basislage besitzt im Kontaktbereich mit der Adhäsionslage eine Kunststoffpeel-Schicht, die in ihrem Hauptpolymer Partikel oder unmischbare Phasen aufweist, beispielsweise in Polyethylen dispergiertes Polybutylen. Die Adhäsionslage peelt gegen die Kunststoffpeel-Schicht.

EP 1 439 056 A1 beschreibt ein Laminat aus zwei Folienlagen mit unterschiedlichen Reißfestigkeiten, insbesondere aus Polyester und Polyethylen. Hierbei ist die aus einem Folienmaterial hoher Reißfestigkeit (im Falle von Polyester und Polyethylen ist dies Polyethylen) bestehende Lage des Laminats mehrschichtig ausgebildet und weist mindestens zwei aus dem Material hoher Reißfestigkeit bestehende Schichten auf, die durch eine Klebstoffschicht geringer Scherfestigkeit verbunden sind. Die Scherfestigkeit der Klebstoffschicht ist so eingestellt, dass die Schichten der Folienlage voneinander abziehbar sind.

### AUFGABE DER ERFINDUNG

Der Erfindung liegt die Aufgabe zugrunde, ein Laminat mit hoher Stabilität gegen Einreißen und/oder Weiterreißen vorzuschlagen, welches insbesondere eine gegenüber dem Stand der Technik erhöhte Reißfestigkeit besitzt und/oder eine alternative Ausgestaltung eines Laminats bereitstellt.

### LÖSUNG

Die Aufgabe der Erfindung wird erfindungsgemäß mit den Merkmalen des unabhängigen Patentanspruchs gelöst. Weitere bevorzugte erfindungsgemäße Ausgestaltungen sind den abhängigen Patentansprüchen zu entnehmen.

### BESCHREIBUNG DER ERFINDUNG

Die Erfindung beruht zunächst auf der Erkenntnis, dass gemäß dem Stand der Technik, wie dieser beispielsweise in WO 2011/127916 A1 beschrieben ist, ein Laminat mit erhöhter Reißfestigkeit bereitgestellt wird, in dem die Rissenergie aufgenommen wird durch ein Reißen der Toplage einerseits und das Ablösen der Toplage mit der Adhäsionslage und ggf. einer unmittelbar der Adhäsionslage benachbarte Rissenergie-Aufnahmeschicht von der Basislage andererseits. Diese Ausgestaltung gewährleistet einerseits die Rissfestigkeit durch die erläuterte Aufnahme der Rissenergie und andererseits mit den verbleibenden intakten Restschichten der Basislage die gewünschte Dichtigkeit der mit dem Laminat gebildeten Verpackung. Stark vereinfacht kann der Wirkmechanismus der hier eingesetzten Rissenergie-Aufnahmeschicht derart verstanden werden, dass die in der Rissenergie-Aufnahmeschicht enthaltenen Partikel oder unmischbaren Phasen einen einheitlichen Rissfortschritt behindern - anders gesagt stellen sich die Partikel oder unmischbaren Phasen dem Riss in den Weg, womit dieser im Bereich der Partikel oder unmischbaren Phasen blockiert, umgelenkt und/oder unter Umständen in mehrere Teilrisse aufgeteilt wird, womit eine erhöhte Rissenergie aufgenommen werden kann.

Die Erfindung beruht des Weiteren auf der Erkenntnis, dass die Ausbildung eines Risses und dessen Fortschritt unter Umständen stärker ist, wenn eine sehr direkte Einleitung der Rissenergie erfolgt. Die Erfindung schlägt vor diesem Hintergrund vor, dass eine Pufferschicht Einsatz findet, welche zu einer weniger unmittelbaren Einleitung der Rissenergie führt. Die Reißfestigkeit von Folien ist definiert in der Norm oder der Norm ASTM D 882-02, die auch ein Testverfahren für die Reißfestigkeit beschreibt. Für marktübliche Laminate ist eine Reißfestigkeit von 2 N/mm² (ermittelt nach der Norm ASTM D 882-02) bekannt. Ein erfindungsgemäßes Laminat kann Reißfestigkeiten im Bereich oberhalb von 5 N/mm², oberhalb von 10 N/mm² oder sogar oberhalb von 14 N/mm² (ermittelt jeweils nach der Norm ASTM D 882-02) erzielen. Ein Laminat ist jedoch auch dann erfindungsgemäß, wenn es eine andere Reißfestigkeit erzielt.

Für die erfindungsgemäße Ausgestaltung ist das Laminat, bei welchem es sich insbesondere um ein Kunststofffolien-Laminat handelt, mit einer Decklage und einer mehrschichtigen Basislage gebildet, die über ein Adhäsionsmittel (mit dem eine zusätzliche Adhäsionslage gebildet sein kann) miteinander laminiert sind. Während durchaus möglich ist, dass zusätzlich zu der Decklage, der Basislage und der Adhäsionslage weitere Lagen vorhanden sind, ist vorzugsweise das Laminat ausschließlich aus den genannten Lagen gebildet.

Erfindungsgemäß ist eine Rissenergie-Aufnahmeebene, welche vorzugsweise zwischen benachbarten Lagen oder Schichten gebildet ist, oder eine Rissenergie-Aufnahmeschicht vorhanden, welche bestimmt ist, zusätzlich zu der Aufnahme der Rissenergie durch Einreißen und/oder Weiterreißen einzelner Schichten oder Lagen Rissenergie aufzunehmen. Im Bereich der Rissenergie-Aufnahmeebene oder Rissenergie-Aufnahmeschicht erfolgt ein Einreißen und/oder Weiterreißen unter Aufnahme von Rissenergie, indem teilweise eine Trennung von benachbarten Schichten im Bereich der Rissenergie-Aufnahmeebene oder ein teilweises Durchtrennen der Rissenergie-Aufnahmeschicht erfolgt. Die von der Basislage ausgebildete Pufferschicht ist hierbei zwischen dem Adhäsionsmittel (oder der Adhäsionslage) und der Decklage einerseits und der Rissenergie-Aufnahmeebene oder Rissenergie-Aufnahmeschicht andererseits angeordnet. Durch den Einsatz der Pufferschicht erfolgt eine "weichere", allmählichere, unter Umständen über eine größere Fläche verteilte Einleitung der Rissenergie in die Rissenergie-Aufnahmeebene oder Rissenergie-Aufnahmeschicht, wodurch sich letztendlich ein veränderter Riss- und/oder Weiterreißmechanismus und/oder eine erhöhte Reißfestigkeit ergibt.

Grundsätzlich gibt es für den Aufbau der Basislage vielfältige Möglichkeiten. So kann die Basislage mit einer beliebigen Anzahl von Schichten ausgebildet sein. Vorzugsweise ist die Zahl der Schichten der Basislage ungerade. Die ungerade Zahl der Schichten der Basislage kann unter Umständen vorteilhaft sein, wenn gewünscht ist, dass die Basislage gewisse "Symmetrieanforderungen" erfüllen soll. So kann beispielsweise durch gezielte Gestaltung der physikalischen Eigenschaften der Schichten auf beiden Seiten einer Mittelschicht vermieden werden, dass sich eine Rollneigung der Basislage (auch als "curl" bezeichnet) ergibt. Somit kann unter Umständen auch eine ungerade Zahl von Schichten der Basislage Einsatz finden, obwohl an sich eine gerade Zahl der Schichten der Basislage für die Aufnahme der Rissenergie ausreichend wäre. Durch die unterschiedlichen Schichten können des Weiteren unterschiedliche gewünschte Eigenschaften in der Basislage verwirklicht werden.

Für einen besonderen Vorschlag der Erfindung ist die Basislage dreischichtig ausgebildet. Mit einer verhältnismäßig geringen Dicke der Basislage kann bei dreischichtigem Aufbau einerseits die Verwirklichung der Pufferschicht in der der Decklage zugewandten Schicht der Basislage erfolgen, während gleichzeitig die Symmetrie durch geeignete Wahl der Schicht auf der anderen Seite von einer Mittelschicht gewährleistet werden kann.

Für die Herstellung der Basislage aus den unterschiedlichen Schichten können beliebige Herstellungsverfahren Einsatz finden, beispielsweise auch ein Laminieren von Schichten der Basislage. In besonderer Ausgestaltung der Erfindung sind die Schichten der Basislage (teilweise oder sämtlich) koextrudiert.

Insbesondere, wenn Schichten laminiert werden, aber auch, wenn Drucke aufgebracht werden sollen oder aus anderen Gründen die Weiterbehandlung einer Schichtoberfläche notwendig ist, ist eine Vorbehandlung der Schichtoberfläche erforderlich. Oberflächen von Polymeren sind normalerweise unpolar und wasserabweisend und nehmen daher Aufträge wie adhäsive Mittel oder Druckfarben nur schlecht oder gar nicht an. Zur Vorbehandlung der Oberfläche sind verschiedene Methoden bekannt, so etwa eine Plasmabehandlung, eine Flammbehandlung oder eine Fluorierung.

Vorzugsweise kommt als Vorbehandlung eine Korona-Behandlung zum Einsatz. Hierzu wird ein zu behandelndes Schichtmaterial (oder werden mehrere miteinander verbundene Schichten) zwischen zwei Elektroden gebracht, an denen eine ausreichend hohe Wechselspannung anliegt. Zwischen den Elektroden kommt es zu einer Entladung. Dabei ist eine der Elektroden als eine Art Walze ausgebildet, über die das Schichtmaterial geführt wird. Durch die Entladung wird eine Struktur der Oberfläche des Schichtmaterials verändert, insbesondere wird ihre Polarität erhöht. Dabei treten Oxidationsprozesse neben radikalischen Spaltungen von Polymerketten und weiteren Prozessen auf. Durch die Korona-Behandlung der Schichtoberfläche wird die Verbindung mit einer benachbarten Schicht, beispielsweise mittels Laminierung, aber auch das Aufbringen eines Drucks ermöglicht oder verbessert.

Alternativ ist eine Verwendung von anorganischen Füllstoffen zur Beeinflussung der Schichtoberfläche möglich. Dazu zählen Kalziumkarbonat, Bariumsulfat, Talkum, Siliziumdioxid, Titandioxid und Industrieruß. Die anorganischen Füllstoffe werden bereits vor einem Extrusionsprozess in ein Polymermaterial eingebracht und verändern so die Struktur der Oberflächen nach dem Extrusionsprozess.

Bei der vorbehandelten oder durch Verwendung des anorganischen Füllstoffs beeinflussten Schichtoberfläche handelt es sich vorzugsweise um eine innerhalb des Laminats liegende Schichtoberfläche, mittels welcher somit eine Verbindung benachbarter Schichten erfolgt. Insbesondere ist diese vorbehandelte Schichtoberfläche nicht im Bereich der Rissenergie-Aufnahmeebene angeordnet.

In weiterer Ausgestaltung schlägt die Erfindung zwei unterschiedliche Varianten vor:
Gemäß einer ersten Variante findet in dem Laminat die Rissenergie-Aufnahmeschicht Einsatz. Hierbei kann diese in einer Ausgestaltung mit Polybutylen gebildet sein. Das Polybutylen ist vorzugsweise ungleichförmig in der Rissenergie-Aufnahmeschicht verteilt. Hierbei gewährleistet das in der Rissenergie-Aufnahmeschicht ungleichmäßig verteilte Polybutylen die eingangs erläuterte Behinderung und/oder Umlenkung eines Risses und/oder Aufteilung eines Risses in mehrere Risse, womit ein Rissfortschritt behindert wird. Unter Umständen kann durch Wahl des Gewichtsanteils des Polybutylens in der Rissenergie-Aufnahmeschicht sogar gezielt Einfluss auf das Rissfortschrittsverhalten genommen werden.

Das Polybutylen ist vorzugsweise ungleichmäßig in einem beliebigen Basismaterial (oder mehreren Basismaterialien) der Rissenergie-Aufnahmeschicht verteilt. Bei diesem Basismaterial kann es sich insbesondere um Polyethylen handeln. Wenn entsprechend die Rissenergie-Aufnahmeschicht mit Polyethylen und Polybutylen gebildet ist, kann unter Umständen auf verhältnismäßig einfache Weise die nicht gleichförmige Vermischung des Polyethylens und des Polybutylens gewährleistet werden.

Andererseits können bei derartiger Ausgestaltung der Rissenergie-Aufnahmeschicht unter Umständen elastische Eigenschaften des Polyethylens genutzt werden, welche auch bei einer punktuellen Beanspruchung unter Umständen einen Widerstand gegen einen Riss bereitstellen, womit weiterer Einfluss auf das Rissenergie-Aufnahmeverhalten genommen werden kann.

Eine ungleichmäßige Verteilung des Polybutylens in dem Polyethylen kann beispielsweise mit einer untersättigten Fahreweise des Extruders erzielt werden (vgl. www.lico.it/prodotti_bot_d.html). Dabei ist es bekannt, dass einem Extruder, beispielsweise einem Schneckenextruder, nicht die volle Menge des Polymermaterials zugeführt wird, die er verarbeiten könnte, sondern lediglich eine Teilmenge dieser Menge. Gekennzeichnet ist die untersättigte Extrusionsfahrweise also dadurch, dass ein Ausstoßkoeffizient erzielt wird, der unterhalb eines Nennkoeffizienten liegt, der bei normaler, gesättigter Extrusionsfahrweise erzielt würde. Dabei können gleichzeitig mehrere Polymermaterialien zugeführt werden, hier bspw. Polyethylen und Polybutylen. Dabei erfolgt, während die Polymermaterialien den Schneckenextruder durchlaufen, eine besonders gleichmäßige Vermischung der Polymermaterialien. Insbesondere kann ein konstantes Massenverhältnis der mehreren Polymermaterialien erzielt werden. Durch die untersättigte Extrusionsfahrweise finden an keinem Punkt des Extrusionsprozesses, insbesondere nicht in einem Einfülltrichter des Schneckenextruders, Materialablagerungen statt, die zu einer teilweisen Entmischung oder ungleichmäßigen Vermischung führen könnten. Die Polymermaterialien werden gleichmäßig verarbeitet und Partikelgrößen im Mikrometerbereich erzielt, sodass eine präzise Steuerung des Verhältnisses von Polybutylen zu Polyethylen und damit der Eigenschaften der Rissenergie-Aufnahmeschicht möglich ist.

In einer zweiten Variante der Erfindung erfolgt nicht (oder nicht ausschließlich) eine teilweise Durchtrennung einer Rissenergie-Aufnahmeschicht. Vielmehr nutzt diese Variante gezielt eine teilweise Trennung von benachbarten Schichten im Bereich einer Rissenergie-Aufnahmeebene. In besonderer Ausgestaltung ist die Rissenergie-Aufnahmeebene zwischen einer Schicht mit Polyethylen und einer Schicht mit Polypropylen gebildet. Hierbei wird vorteilhaft ausgenutzt, dass die Anhaftung der Schicht mit Polyethylen an der Schicht mit Polypropylen derart vermindert ist, dass eine Trennung der genannten Schichten im Bereich der Rissenergie-Aufnahmeebene erfolgt, bevor es zur Trennung anderer Schichten und/oder Durchtrennung einer anderen Schicht kommt.

Durchaus möglich ist, dass eine Kombination beider beschriebener Prozesse auftritt und sowohl eine Rissenergie-Aufnahmeschicht als auch eine Rissenergie-Aufnahmeebene teilweise zur Aufnahme der Rissenergie beitragen.

Grundsätzlich kann eine mit Polypropylen gebildete Schicht an beliebiger Stelle in der Basislage angeordnet sein. In bevorzugter Ausgestaltung der Erfindung liegt die mit Polypropylen gebildete Schicht näher an der Decklage als die Schicht mit Polyethylen, womit die Schicht mit Polypropylen die eingangs genannte Pufferschicht bilden kann. Hierbei ist durchaus möglich, dass zwischen der Schicht mit Polypropylen und der Decklage weitere Schichten angeordnet sind.

Allerdings ist auch möglich, dass die Schicht mit Polyethylen der Decklage näher liegt als die Schicht mit Polypropylen, wobei auch in diesem Fall noch mindestens eine weitere Schicht zwischen der Schicht mit Polyethylen und der Decklage angeordnet sein kann.

In weitere Ausgestaltung dieser Variante ist eine Schicht, die der Schicht mit Polypropylen benachbart ist und die auf der von der Decklage abgewandten Seite der Schicht mit Polypropylen angeordnet ist, mit Polyethylen und Polypropylen gebildet. Auch in diesem Fall findet das Polyethylen als eine Art Basismaterial der genannten Schicht Einsatz, wobei die ergänzende Verwendung von Polypropylen in dieser Schicht erfolgt, um ein Ablösen in einer Ebene zwischen der Schicht mit Polypropylen und der Schicht auf der von der Decklage abgewandten Seite der Schicht mit Polypropylen zu vermeiden (und somit zuverlässig zu gewährleisten, dass die Ablösung im Bereich der Rissenergie-Aufnahmeebene erfolgt, welche gebildet ist zwischen der Schicht mit Polypropylen und der benachbarten Schicht auf der der Decklage zugewandten Seite).

Gemäß einer weiteren erfindungsgemäßen Ausgestaltung sind Schichten, welche nicht die Rissenergie-Aufnahmeschicht oder benachbarte Schichten einer Rissenergie-Aufnahmeebene ausbilden, mit Polyethylen gebildet. Diese Schichten bilden dann bevorzugt die auch bei oder nach dem Auftreten eines Risses verbleibenden Schichten, welche beispielsweise die Dichtigkeit der Verpackung gewährleisten sollen und/oder die Restfestigkeit oder einen Restzusammenhalt gewährleisten sollen. Hierzu können vorteilhaft die Eigenschaften des Polyethylens, insbesondere die Elastizität des Polyethylens, genutzt werden. Hierzu können insbesondere metallocen-katalysierte LLDPE (Polyethylene mit geringer linearer Dichte) eingesetzt werden oder andere beliebige höher reißfeste Polyethylene. Andererseits kann von Vorteil sein, wenn die unterschiedlichen Schichten der Basislage (auch wenn einer Schicht wie erläutert Polybutylen beigemischt ist) mit Polyethylen gebildet sind.

In weiterer Ausgestaltung der Erfindung ist eine Schicht der Basislage als Barriereschicht ausgebildet. Die Funktion einer derartigen Barriereschicht ist eine Beeinflussung und/oder Behinderung eines Übertritts eines Gases und/oder einer Flüssigkeit von einer Seite des Laminats zu einer anderen Seite des Laminats, insbesondere aus der Verpackung heraus oder in diese hinein. Beispielsweise soll ein Eintritt oder Austritt von Feuchtigkeit oder Alkohol von oder zu einer mit dem Laminat gebildeten Verpackung zumindest mittels der Barriereschicht eingeschränkt werden.

Für die Wahl des Materials oder einer Materialzusammensetzung der Barriereschicht gibt es vielfältige Möglichkeiten. In einer Ausgestaltung der Erfindung ist die Barriereschicht mit einem Ethylen-Vinylalkohol-Copolymer gebildet. Ebenfalls möglich ist, dass die Barriereschicht mit Polyamid und Ethylen gebildet ist. Diese Materialien haben unter Umständen auch den Vorteil, dass diese in einem standardgemäßen Extrusionsverfahren eingesetzt werden können, wobei dann auch eine Koextrusion von der Barriereschicht mit anderen Schichten der Basislage erfolgen kann.

Für die Ausbildung der Decklage gibt es vielfältige Möglichkeiten. So kann diese mit einer einzigen Schicht oder mehreren Schichten gebildet sein, wobei ein Laminieren oder Koextrudieren der Decklage möglich ist. In einer Ausgestaltung der Erfindung ist die Decklage mit einem orientierten Polymer gebildet. Bei den orientierten Polymeren ist in dem Herstellungsverfahren mittels eines Verstreckens eine Ausrichtung kristalliner Fasern erfolgt, was unter Umständen zur Folge hat, dass etwaige Verknotungen von Ketten weitestgehend aufgehoben werden und/oder die Ketten eine Vorzugsrichtung ausbilden. Unter Umständen ergibt sich damit eine Decklage, welche ein verhältnismäßig großes E-Modul besitzt und welche nur in einem geringen Ausmaß dehnbar ist. Eine derart gebildete Decklage kann vorteilhaft sein für die Aufbringung eines Aufdrucks. Hierbei ist auch möglich, dass die Decklage (oder eine äußere Schicht der Decklage) auf der Innenseite, also der der Basislage zugewandten Seite, mit einem sogenannten "Konterdruck" versehen ist. Hierdurch kann ein qualitativ hochwertig erscheinendes Druckbild erzeugt werden, da sich bei dem Blick auf die Außenseite der Decklage infolge der "Abdeckung" des Aufdrucks durch die Decklage (oder einer äußeren Schicht der Decklage) ein gewisser Glanzeffekt ergeben kann. Darüber hinaus kann durch Einsatz eines Konterdruckverfahrens der Aufdruck abriebfest gestaltet werden, da der Aufdruck durch die darüberliegende Decklage geschützt ist.

Als orientiertes Polymer der Decklage kann ein beliebiges Material eingesetzt werden. Insbesondere findet hierzu Einsatz ein orientiertes Polyethylenterephthalat, ein orientiertes Polypropylen oder ein orientiertes Polyamid.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einer Schicht die Rede ist, ist dies so zu verstehen, dass genau eine Schicht, zwei Schichten oder mehr Schichten vorhanden sein können. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt schematisiert einen Querschnitt eines Laminats gemäß dem Stand der Technik.
- **Fig. 2**: zeigt schematisiert einen Querschnitt durch ein erfindungsgemäßes Laminat mit einer Rissenergie-Aufnahmeschicht.
- **Fig. 3**: zeigt schematisiert einen Querschnitt durch ein erfindungsgemäßes Laminat mit einer Rissenergie-Aufnahmeebene.
- **Fig. 4**: zeigt schematisiert einen Querschnitt durch ein erfindungsgemäßes Laminat mit einer Barriereschicht.
- **Fig. 5**: zeigt schematisiert einen Querschnitt durch ein erfindungsgemäßes Laminat mit einer Barriereschicht.

### FIGURENBESCHREIBUNG

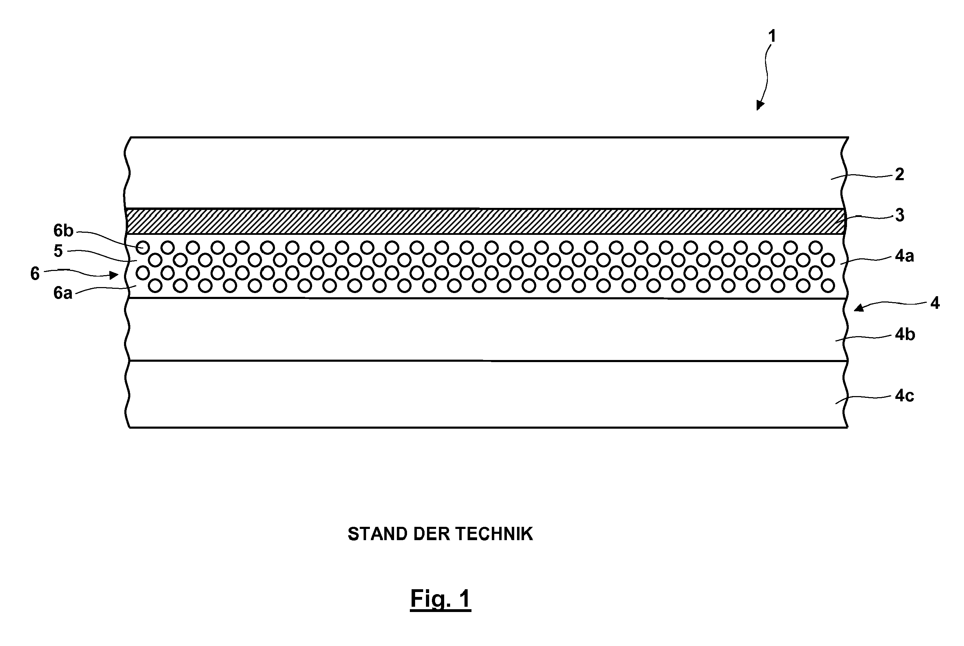

**Fig. 1** zeigt ein Laminat 1 gemäß dem Stand der Technik (WO 2011/127916 A1). Eine Decklage 2 und eine Basislage 4 sind verbunden über ein Adhäsionsmittel 3, welches hier eine Adhäsionslage bildet. Die Basislage 4 kann grundsätzlich beliebig viele Schichten aufweisen. Für das dargestellte Ausführungsbeispiel ist die Basislage 4 dreischichtig dargestellt. Ebenso kann die Decklage 2 beliebig viele Schichten besitzen. Die Schicht 4a der Basislage 4, die an das Adhäsionsmittel 3 angrenzt, ist als Rissenergie-Aufnahmeschicht 5 ausgebildet. Sie ist gebildet mit unmischbaren Phasen 6, die hier mit einem Grundsubstrat 6a und einer Beimischung 6b gebildet sind. Bei einem Ein- und/oder Weiterreißen des Laminats 1 wird die Rissenergie in der Rissenergie-Aufnahmeschicht 5 aufgenommen. Dabei kann ein Riss aufgrund des Aufbaus der Rissenergie-Aufnahmeschicht 5 mit den unmischbaren Phasen 6 jeweils nur innerhalb des Grundsubstrates 6a propagieren und stoppt an den Beimischungen 6b, so dass durch häufige Richtungsänderungen eine verästelte Ausbildung des Risses begünstigt wird und die Rissenergie so aufgenommen wird.

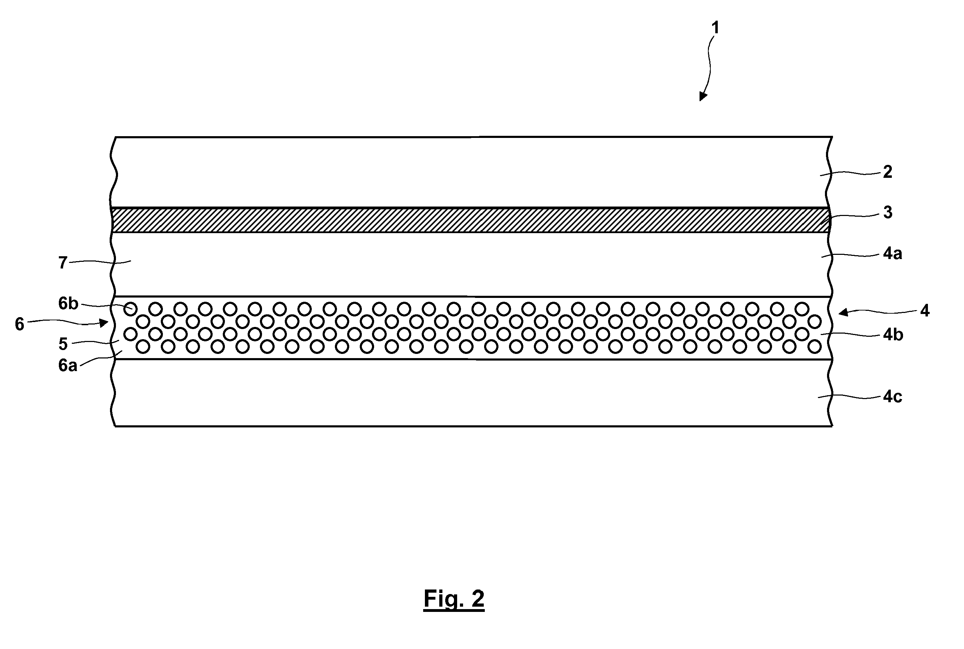

Bei einer Ausgestaltung der Erfindung gemäß **Fig. 2** erfolgt ein Aufbau des Laminats 1 mit einer Decklage 2 und einer Basislage 4, die über ein Adhäsionsmittel 3 verbunden sind. Bei dem in Fig. 2 dargestellten dreischichtigen Aufbau der Basislage 4 übernimmt die dem Adhäsionsmittel 3 benachbarte Schicht 4a jedoch nicht die Funktion einer Rissenergie-Aufnahmeschicht 5, sondern die einer Pufferschicht 7, während die Rissenergie-Aufnahmeschicht 5 in eine innenliegende, hier mittlere, Schicht 4b der Basislage 4 verlagert ist. Die Pufferschicht 7 verbessert die Einleitung der Rissenergie in die Rissenergie-Aufnahmeschicht 5 und damit die Festigkeit des Laminats 1 gegen Einreißen oder Weiterreißen. Dabei kann grundsätzlich jede Schicht, die auf der von dem Adhäsionsmittel 3 abgewandten Seite der Pufferschicht 7 angeordnet ist, die Funktion der Rissenergie-Aufnahmeschicht 5 übernehmen.

Die Erfindung ist hierbei nicht auf den gezeigten dreischichtigen Aufbau beschränkt, sondern kann grundsätzlich beliebig viele Schichten innerhalb der Basislage 4 beinhalten. Bevorzugt ist die Basislage dreischichtig, wobei bevorzugt die dem Adhäsionsmittel nächstliegende Schicht 4a die Pufferschicht ausbildet. In besonderer Ausgestaltung der Erfindung wird die Pufferschicht 7 mit einem höher reißfesten Polyethylen gebildet, bevorzugt mit einem Polyethylen geringer linearer Dichte (LLDPE), besonders bevorzugt mit einem metallocen-katalysierten LLDPE. Ebenso kann die Decklage 2 mehrschichtig ausgebildet sein. Bevorzugt wird sie mit einem orientierten Polymer gebildet, beispielsweise orientiertem Polyethylenterephthalat, orientiertem Polypropylen oder einem orientierten Polyamid.

Die Rissenergie-Aufnahmeschicht 5 kann gebildet sein mit unmischbaren Phasen 6. Bevorzugt ist eine Bildung des Grundsubstrats 6a mit einem Polyolefin, besonders bevorzugt Polyethylen, und der Beimischung 6b mit Polybutylen. Bevorzugt ist der Massenanteil des Polybutylens kleiner als 20% und größer als 2%, bspw. kleiner als 8% und größer als 4% oder kleiner als 6,5% und größer als 5,5%.

Die Adhäsion kann durch ein beliebiges bekanntes geeignetes Adhäsionsmittel gewährleistet werden, beispielsweise einen Schmelzklebstoff, ein Polyurethan-Isocyanat und/oder einen Dispersionsklebstoff.

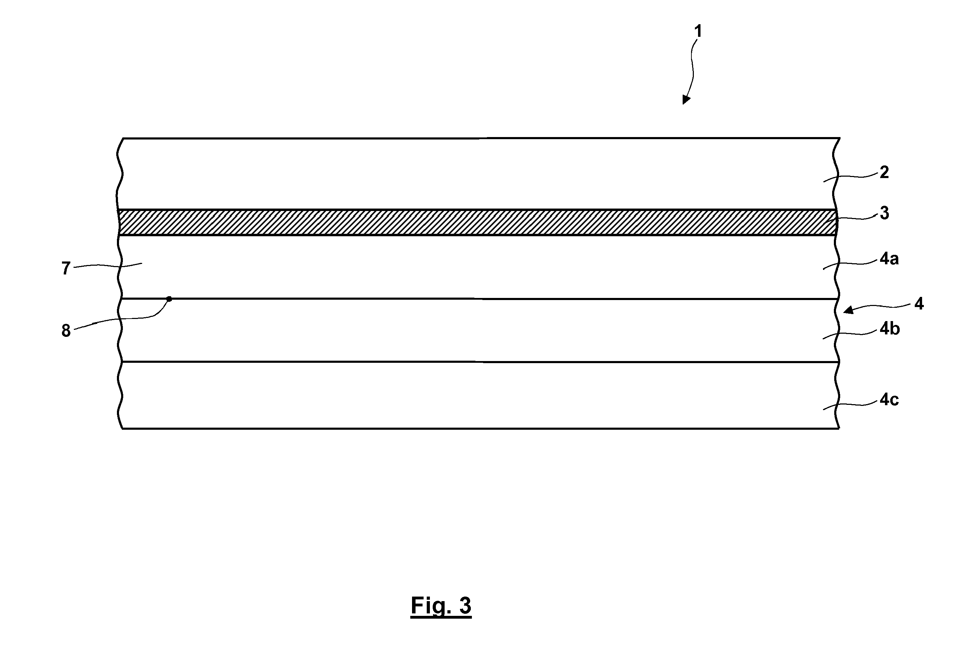

Die **Fig. 3** zeigt eine Ausgestaltung der Erfindung, in der keine Rissenergie-Aufnahmeschicht 5 vorhanden ist. Stattdessen erfolgt in diesem Fall die Aufnahme der Rissenergie durch eine Rissenergie-Aufnahmeebene 8. Diese Rissenergie-Aufnahmeebene 8 befindet sich grundsätzlich zwischen zwei Schichten der Basislage 4. Dargestellt ist für den gezeigten dreischichtigen Aufbau der Basislage 4 eine Rissenergie-Aufnahmeebene 8 zwischen der oberen Schicht 4a und der mittleren Schicht 4b der Basislage 4. Die Rissenergie-Aufnahmeebene 8 kann sich jedoch zum Beispiel auch zwischen der mittleren Schicht 4b und einer unteren Schicht 4c der Basisschicht 4 befinden. Enthält die Basislage 4 mehr Schichten als in Fig. 3 dargestellt, so kann sich die Rissenergie-Aufnahmeebene 8 auch zwischen beliebigen anderen benachbarten Schichten der Basislage 4 befinden.

Soll eine Rissenergie-Aufnahmeebene 8 zwischen der oberen Schicht 4a und der mittleren Schicht 4b gebildet werden, so kann beispielsweise als Material für die obere Schicht 4a Polypropylen gewählt werden und als Material für die mittlere Schicht 4b Polyethylen gewählt werden. In diesem Fall wird als Material für die untere Schicht 4c vorzugsweise ebenfalls Polyethylen gewählt. Da die Verbindung zwischen den beiden Schichten 4b, 4c mit Polyethylen eine stärkere Haftverbindung gewährleistet als die Verbindung zwischen der Schicht 4a mit Polypropylen und der Schicht 4b mit Polyethylen, erfolgt im Falle eines Einreißens und/oder Weiterreißens eine Trennung zwischen den Schichten mit Polypropylen 4a und Polyethylen 4b entlang der Rissenergie-Aufnahmeebene 8.

Gemäß einer anderen Ausgestaltung der Erfindung kann ebenso die obere Schicht 4a mit Polyethylen ausgebildet sein, während die mittlere Schicht 4b mit Polypropylen ausgebildet ist. Diese Ausgestaltung der Erfindung bietet den Vorteil, dass, wenn die untere Schicht 4c auch mit Polyethylen gebildet wird, die Folie symmetrisch aufgebaut ist und daher eine geringe Rollneigung hat. Damit in diesem Fall eine Aufnahme der Rissenergie durch Trennung der Schichten 4a, 4b entlang der Rissenergie-Aufnahmeebene 8 erfolgen kann, ist vorzugsweise die untere Schicht 4c in diesem Falle mit Polyethylen ausgebildet, dem Polypropylen beigemischt wurde. Dadurch kann erreicht werden, dass die Haftverbindung zwischen der mittleren Schicht 4b mit Polypropylen und der unteren Schicht 4c mit Polyethylen und Polypropylen-Beimengung stärker ist, als die zwischen der mittleren Schicht 4b mit Polypropylen und der oberen Schicht 4a mit Polyethylen. Grundsätzlich ist auch hier das Vorhandensein weiterer Schichten innerhalb der Basisschicht 4 möglich, wobei darauf abzustellen ist, dass die schwächste Verbindung zwischen zwei Schichten der Basislage 4 jeweils die Rissenergie-Aufnahmeebene 8 bildet. In jedem Fall ist jeweils die obere Schicht 4a eine Pufferschicht 7.

Die Wahl der Schichten 4a und 4b als die Schichten, die der Rissenergie-Aufnahmeebene benachbart sind, und der Polymere, aus denen die Schichten jeweils gebildet sein können, erfolgt hier lediglich beispielhaft. Andere Kombinationen der Materialien der Schichten sind denkbar. So kann beispielsweise für eine Rissenergie-Aufnahmeebene 8 zwischen der mittleren Schicht 4b und der unteren Schicht 4c ebenso Polyethylen für die Schicht 4b und Polypropylen für die Schicht 4c gewählt werden oder Polypropylen für die Schicht 4b und Polyethylen für die Schicht 4c. Analog kommen beliebige Kombinationen von benachbarten Schichten innerhalb der Basisschicht 4 und/oder von geeigneten Polymeren in Frage.

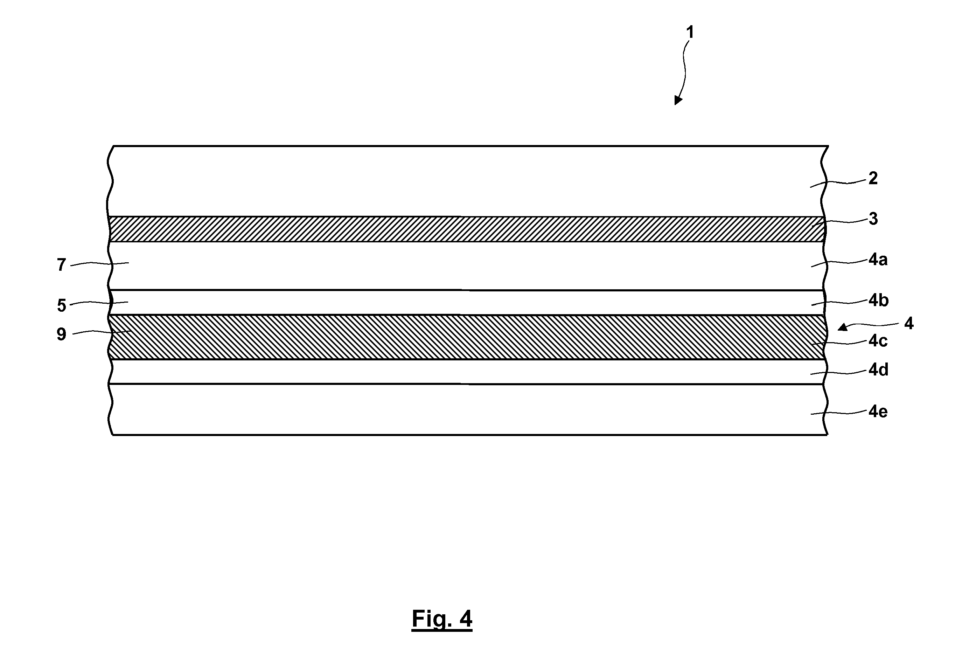

**Fig. 4** zeigt eine Ausgestaltung der Erfindung mit einer Barriereschicht 9. Die Barriereschicht 9 kann beispielsweise mit einem Ethylen-Vinylalkohol-Copolymer gebildet sein, das insbesondere gasdicht ist. Die Barriereschicht 9 kann auch mit einem Polyamid gebildet sein oder mit einem anderen geeigneten Barrierematerial, das insbesondere dicht gegen Gase und/oder Wasserdampf ist.

In der dargestellten Ausführungsform ist die Basislage 4 fünfschichtig, wobei im gezeigten Beispiel die Schicht 4a die Pufferschicht 7 bildet. Die Schicht 4c bildet die Barriereschicht 9. Im dargestellten Beispiel übernimmt die Schicht 4b die Funktion der Rissenergie-Aufnahmeschicht 5. Hierbei kann es sich um eine Schicht mit unmischbaren Phasen 6 handeln.

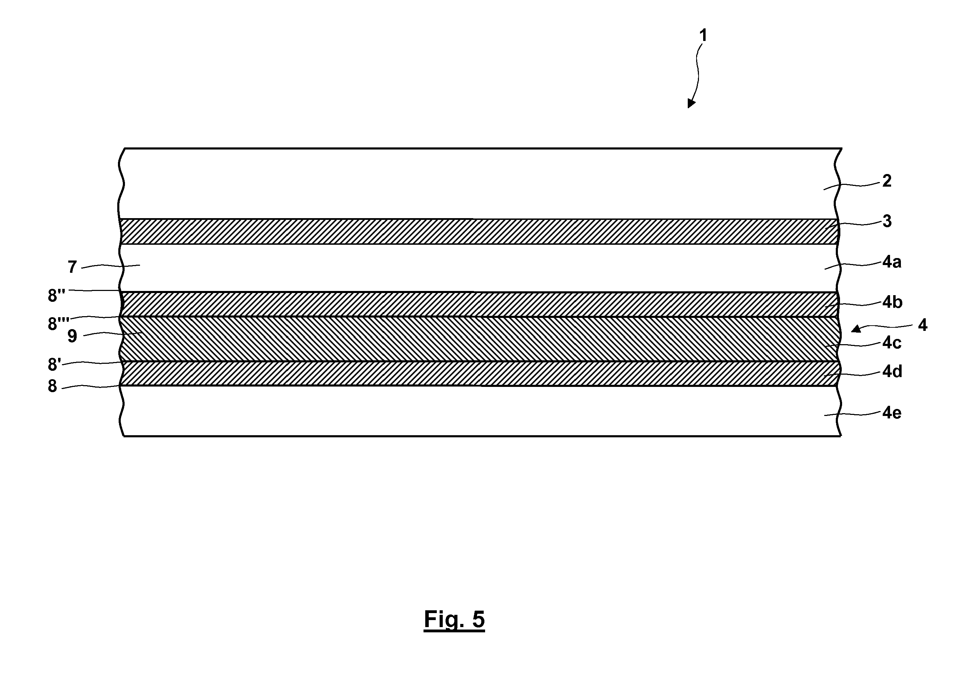

Für eine andere erfindungsgemäße Ausgestaltung, die in **Fig. 5** dargestellt ist, ist es auch möglich, dass in einem Laminat mit einer Barriereschicht 9, die durch die Schicht 4c gebildet ist, die Schicht 4d eine Schicht eines adhäsiven Mittels ist, welche eine geringe Haftung an zumindest einer der benachbarten Schichten 4c, 4e besitzt. Das adhäsive Mittel kann auch mit einem Haftvermittler ausgebildet sein. In diesem Fall findet anstelle der Rissenergie-Aufnahmeschicht 5 gemäß Fig. 4 eine Rissenergie-Aufnahmeebene 8 zwischen der Schicht 4d und der Schicht 4e und/oder eine Rissenergie-Aufnahmeebene 8' zwischen der Schicht 4d und der Schicht 4c Einsatz. Alternativ kann die Schicht 4b als Schicht des adhäsiven Mittels vorgesehen sein, womit dann eine Rissenergie-Aufnahmeebene 8" zwischen der Schicht 4b und der Schicht 4a und/oder eine Rissenergie-Aufnahmeebene 8'" zwischen der Schicht 4b der Schicht 4c Einsatz findet. Bevorzugt ist hierbei die Verwendung von Copolymeren, die mit einem Kleber gepfropft sind, als adhäsives Mittel. Besonders bevorzugt ist die Verwendung von Maleinsäure-Anhydrid als Kleber zum Pfropfen.

Damit eine Delamination entlang der Rissenergie-Aufnahmeebene 8 (bzw. 8', 8", 8"') erfolgt und nicht im Adhäsionsmittel 3 zwischen der Decklage 2 und der Basislage 4, muss eine Vorbehandlung der Oberflächen erfolgen. Eine Oberflächenspannung der Decklage 2 und der Basislage 4 beträgt ohne Vorbehandlung der Oberflächen etwa 30-33 dyn. Die Vorbehandlung der Oberflächen kann mit einem bekannten Verfahren zur Vorbehandlung von Oberflächen erfolgen. Bevorzugt erfolgt eine Korona-Behandlung. Mittels der Korona-Behandlung wird die Oberflächenspannung auf bevorzugt mehr als 38 dyn oder sogar mehr als 45 dyn oder mehr als 50 dyn erhöht.

Das erfindungsgemäße Laminat 1 kann Einsatz finden für beliebige Zwecke, insbesondere für die bei der Würdigung des Standes der Technik genannten Zwecke.

Für den Fall, dass es sich bei der Basislage 4 um eine aus mehreren Folienschichten koextrudierte Mehrschichtfolie handelt, beruhen die dargestellten Ausführungsbeispiele (unabhängig davon, ob eine Rissenergie-Aufnahmeebene 8 oder eine Rissenergie-Aufnahmeschicht 5 Einsatz findet) auf der Gemeinsamkeit, dass es bei dem Auftreten eines Risses zu einer Trennung koextrudierter Schichten der Basislage 4 kommt, was auch als "Koex-Bruch" bezeichnet wird.

Während der Ausbildung eines Risses und/oder des Rissfortschrittes kommen zwei unterschiedliche Rissaufnahmemechanismen zur Überlagerung: Während der Ausbildung eines Risses und/oder des Rissfortschrittes kommt es zur Trennung des Laminats 1 mit einem verbleibenden erstes Teillaminat, welches den Riss aufweist, sowie einem verbleibenden zweiten Teillaminat, welches keinen Riss aufweist und u. U. elastisch und/oder plastisch verformt wird. Die Rissenergie wird hierbei zum Teil aufgenommen durch die Ausbildung des Risses in dem ersten Teillaminat sowie zum anderen Teil dadurch aufgenommen, dass sich die beiden Teillaminate voneinander trennen, was erfindungsgemäß durch die "Auflösung" der Rissenergie-Aufnahmeschicht 5 erfolgen kann oder durch eine Trennung der benachbarten Schichten im Bereich der Rissenergie-Aufnahmeebene 8.

### BEZUGSZEICHENLISTE

- 1: Laminat
- 2: Decklage
- 3: Adhäsionsmittel
- 4: Basislage
- 4a: Schicht
- 4b: Schicht
- 4c: Schicht
- 4d: Schicht
- 4e: Schicht
- 5: Rissenergie-Aufnahmeschicht
- 6: Unmischbare Phasen
- 6a: Grundsubstrat
- 6b: Beimischung
- 7: Pufferschicht
- 8: Rissenergie-Aufnahmeebene
- 9: Barriereschicht

## Patentansprüche

1. Laminat (1) mit hoher Stabilität gegen Einreißen und/oder Weiterreißen mit einer Decklage (2) und einer mehrschichtigen Basislage (4), die über ein Adhäsionsmittel (3) miteinander laminiert sind, wobei eine Rissenergie-Aufnahmeebene (8) zwischen benachbarten Schichten oder eine Rissenergie-Aufnahmeschicht (5) vorhanden ist, im Bereich welcher bei einem Einreißen und/oder Weiterreißen unter Aufnahme von Rissenergie eine teilweise Trennung von benachbarten Schichten im Bereich der Rissenergie-Aufnahmeebene (8) oder eine teilweise Durchtrennung der Rissenergie-Aufnahmeschicht (5) erfolgt, **dadurch gekennzeichnet, dass** zwischen
a) dem Adhäsionsmittel (3) und der Decklage (2) und
b) der Rissenergie-Aufnahmeebene (8) oder Rissenergie-Aufnahmeschicht (5) eine Pufferschicht (7) der Basislage (4) angeordnet ist.

2. Laminat (1) nach Anspruch 1, **dadurch gekennzeichnet, dass** die Basislage (4) dreischichtig ausgebildet ist.

3. Laminat (1) nach einem der vorhergehenden Ansprüche, **dadurch gekennzeichnet, dass** die Basislage (4) koextrudiert ist.

4. Laminat (1) nach einem der vorhergehenden Ansprüche, **dadurch gekennzeichnet, dass** die Rissenergie-Aufnahmeschicht (5) mit Polybutylen gebildet ist.

5. Laminat (1) nach einem der Ansprüche 1 bis 3, **dadurch gekennzeichnet, dass** die Rissenergie-Aufnahmeschicht (5) mit Polyethylen und Polybutylen gebildet ist.

6. Laminat (1) nach einem der Ansprüche 1 bis 3, **dadurch gekennzeichnet, dass** die Rissenergie-Aufnahmeebene (8) zwischen einer Schicht mit Polyethylen und einer Schicht mit Polypropylen gebildet ist.

7. Laminat (1) nach Anspruch 6, **dadurch gekennzeichnet, dass** die Schicht mit Polypropylen der Decklage (2) näher liegt als die Schicht mit Polyethylen.

8. Laminat (1) nach Anspruch 6, **dadurch gekennzeichnet, dass** die Schicht mit Polyethylen der Decklage (2) näher liegt als die Schicht mit Polypropylen.

9. Laminat (1) nach Anspruch 8, **dadurch gekennzeichnet, dass** eine Schicht, die
a) der Schicht mit Polypropylen benachbart ist und
b) auf der von der Decklage (2) abgewandten Seite der Schicht mit Polypropylen angeordnet ist,
mit Polyethylen und Polypropylen gebildet ist.

10. Laminat (1) nach einem der vorhergehenden Ansprüche, **dadurch gekennzeichnet, dass** Schichten, die nicht die Rissenergie-Aufnahmeschicht (5) oder benachbarte Schichten einer Rissenergie-Aufnahmeebene (8) ausbilden, mit Polyethylen gebildet sind.

11. Laminat (1) nach einem der vorhergehenden Ansprüche, **dadurch gekennzeichnet, dass** eine Schicht der Basislage (4) als Barriereschicht (9) ausgebildet ist.

12. Laminat (1) nach Anspruch 11, **dadurch gekennzeichnet, dass** die Barriereschicht (9) mit einem Ethylen-Vinylalkohol-Copolymer gebildet ist.

13. Laminat (1) nach Anspruch 11, **dadurch gekennzeichnet, dass** die Barriereschicht (9) mit einem Polyamid und Ethylen gebildet ist.

14. Laminat (1) nach einem der vorhergehenden Ansprüche, **dadurch gekennzeichnet, dass** die Decklage (2) mit einem orientierten Polymer gebildet ist.

15. Laminat (1) nach Anspruch 14, **dadurch gekennzeichnet, dass** die Decklage (2)
a) mit orientiertem Polyethylenterephthalat,
b) mit orientiertem Polypropylen und/oder
c) mit einem orientierten Polyamid
gebildet ist.

16. Laminat (1) nach einem der vorhergehenden Ansprüche, **dadurch gekennzeichnet, dass** eine innerhalb des Laminats (1) liegende Schichtoberfläche vorbehandelt ist.
